# EUROPEAN PATENT APPLICATION

(11) **EP 0 874 516 A2**
(43) Date of publication of application: **28.10.1998**
(21) Application number: 98303217.8
(22) Date of filing: 24.04.1998
(51) Int. Cl.: H04N 1/00

(54) **Judging contamination of a scanner**

(30) Priority: 24.04.1997 KR 9715316
(71) Applicant: Samsung Electronics Co., Ltd., Suwon City, Kyungki-do (KR)
(72) Inventor: Kim, Hea-chul San 14, Nongseo-ri, Kyonggi-do (KR)
(74) Representative: Ellis, Kate, Dr.

(57) **Abstract**

A method and apparatus for judging contamination of a scanner in a device having a scanning function, such as a printer scanner, are disclosed. When a data level of a white reference panel which is scanned is above a predetermined reference level, normal scanning is performed. Otherwise, the contamination of a scanner module or the white reference panel is notified to the user. Accordingly, the user can check the scanner or the white reference panel and stable image quality can be obtained by maintaining the scanner clean.

## Description

### Background of the Invention

The present invention relates to method and apparatus for judging whether a scanner in a device having a scanner function, such as a printer scanner of shuttle type, is contaminated.

In order to test whether a scanner used in a scanner module of a conventional facsimile or is operating normally, a technical mode, used mainly for after sale services, is used during the testing of the damage of parts and deterioration of the characteristics of the scanner instead of a user mode. In this case a test waveform of the scanner, i.e. a white reference value of a scanning region, is required. The damage to the scanner and hence the distortion of the scanning waveform, are judged through the printout. This function is not well known to the public.

However, since a technical mode rather than a user mode is used to test damage to parts and characteristics of the scanner module used in the scanner of a conventional facsimile, users have no countermeasures which they can implement. This is true even though the normal white reference level is not outputted due to the contamination of the scanner thus preventing the printing of a clean image quality.

Most of the user modules recommend cleaning the scanner when the contamination of the scanner is in doubt, for example when a clean image quality is not realized. However, since it is difficult to know the correct point at which to clean the scanner, the user usually judges that the scanner or the white reference panel is contaminated when the scanned white reference level is not output after scanning a white reference panel, for example a blank piece of paper.

There is a problem in that the user can be assured of obtaining the normal image data only by catching the deterioration in image quality when scanning data. This method is inefficient, as the scanner may be cleaned too soon, and inconsistent, as the scanner may be cleaned too late.

### Summary of the Invention

According to a first aspect of the present invention, there is provided a method of judging contamination of a scanner in a device having a scanning function comprising the steps of scanning a white reference panel, comparing a data level derived from scanning the white reference panel with a predetermined reference level, and performing normal scanning when the data level of said white reference panel is larger than said reference level and/or generating an alarm informing of the contamination of the scanner when the data level of said white reference panel is smaller than said reference level.

In a second aspect there is provided an apparatus for judging contamination of a scanner in a device having a scanning function comprising means for scanning a white reference panel, means for comparing a data level derived from scanning the white reference panel with a predetermined reference level, and means for performing normal scanning when the data level of said white reference panel is larger than said reference level and/or generating an alarm informing of the contamination of the scanner when the data level of said white reference panel is smaller than said reference level.

Preferably, a scanner module is moved to a position where the white reference panel is located.

Preferably, the data level of said white reference panel is converted into a voltage level and then compared with a reference voltage corresponding to said reference level.

Preferably, there are provided means for setting a reference voltage level of a white reference panel located so as to be scanned by a scanner module, an image sensor for converting a data level acquired by scanning said white reference panel into a voltage level, a comparator for comparing the converted voltage level of said white reference panel with the reference voltage level, and a central processing unit for operating or stopping a carriage return motor according to the result compared by said comparator.

Preferably, two or more resistances, such as level resistances, are provided for setting the reference level of the white reference panel.

Preferably, the carriage return motor is activated in the case that the converted voltage level of said white reference panel is larger than said reference level.

Preferably, the carriage return motor is prevented from operating in the case that the converted voltage level of said white reference panel is smaller than said reference level.

Preferably, the alarm comprises a warning message displayed on a display panel.

Preferably, the alarm comprises generation of a sound and/or activation of a light.

Thus, preferably, normal scanning is performed when a data level of the white reference panel which is scanned in a device having a scanning function, such as a printer scanner, is above a predetermined reference level. Preferably, when the data level of the scanned white reference panel is below the reference level, it is judged that the scanner or the white reference panel is contaminated. Preferably, in this case, a user is notified by a warning message displayed on a display panel and/or an alarm is generated, thereby a user can check the scanner or the white reference panel.

Preferably, when the converted voltage level of the white reference panel is smaller then the reference level, the display channel is further included to display the warning message and generate alarm.

Thus, the invention provides a method and apparatus for judging the contamination of a scanner which performs normal scanning when a data level of a white reference panel, which is scanned in a device having a scanning function, such as a printer scanner, is above a reference level and displays a warning message on a display panel and generating an alarm by determining that the scanner and/or the white reference panel, is contaminated when the data level of the scanned white reference panel is below a reference level, thereby enabling the scanner and/or the white reference panel to be duly tested by a user.

Therefore, the present invention preferably seeks to inform a user of a lowering of an image quality caused by the contamination of a scanner before scanning. The present invention preferably also aims to stop the operation of the scanner when the contamination of the scanner is detected.

### Brief Description of the Drawings

The invention will be described, by way of example only, with reference to the accompanying drawings.

FIG. 1 is a view illustrating the structure of a device having a scanning function, such as a printer scanner.

FIG. 2 is a block diagram illustrating an apparatus for judging contamination of a scanner according to the present invention.

FIG. 3 is a flowchart illustrating a method for judging contamination of a scanner according to the present invention.

### Detailed Description of the Preferred Embodiments

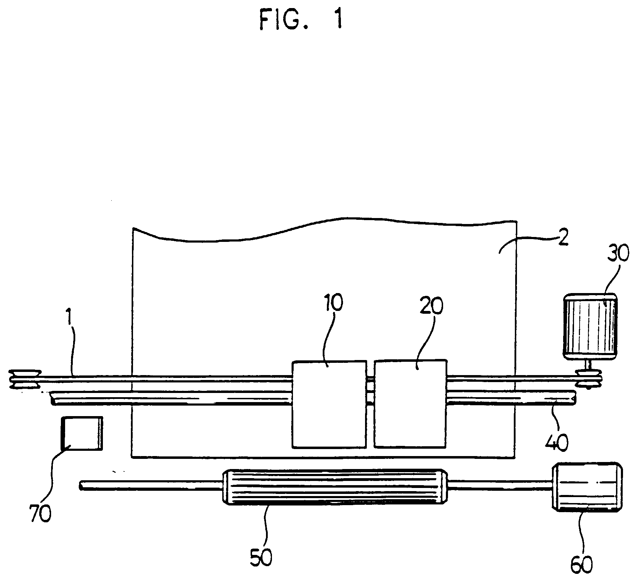

FIG.1 is a perspective view illustrating a device having a scanning function, such as a printer scanner applied to the present invention. The device having a scanning function includes a scanner module 10 for scanning data and a print head 20 for printing the scanned data and printing data in general. There is also a carriage return motor 30 for moving the scanner module 10 and the print head 20. A shaft 40 supports the movement of the scanner module 10 and the print head 20. A line feed roller 50 transports a document 2. A line feed motor 60 rotates the line feed roller 50. A white reference panel 70 is used for obtaining a white reference value. A reference numeral 1 illustrated in FIG. 1 indicates a transporting belt.

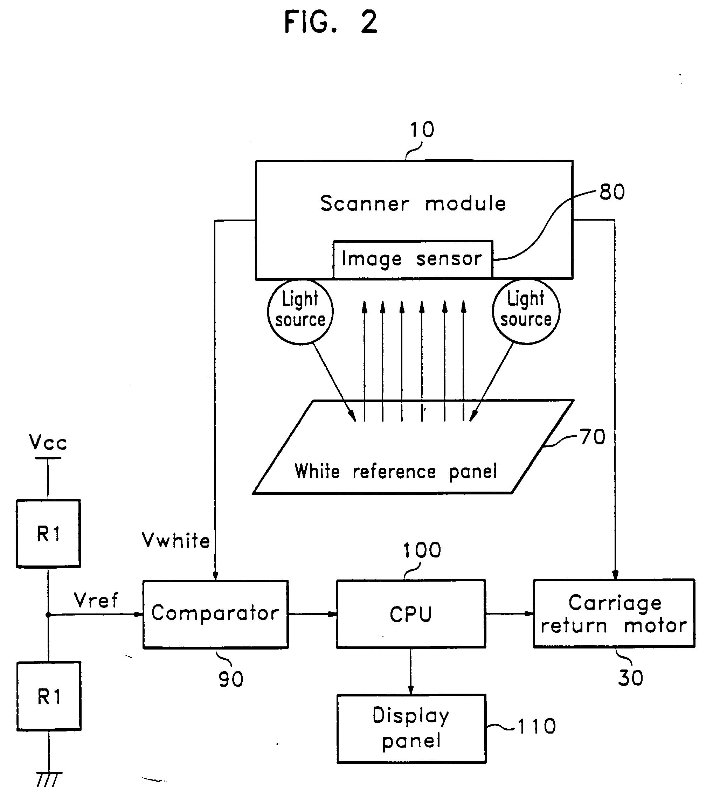

FIG. 2 is a block diagram illustrating an apparatus for judging contamination of the scanner according to the present invention. The apparatus includes level resistances R1 and R2 for setting the expected level of reflection from the white reference panel 70 corresponding to no or insignificant contamination of the white reference panel 70 or the scanner. An image sensor 80 converts the data level of reflected light from the white reference panel 70, which is exposed to a light source, into a voltage level. A comparator 90 compares a white reference voltage V_{white}, converted by the image sensor 80, with a set reference voltage V_{ref} of the white reference panel 70. A central processing unit (CPU) 100 controls the operation of the carriage return motor 30 according to the result of the comparator 90 and notifies a user by displaying a warning message and/or generating an alarm such as a sound or light alarm. Thus, the user is notified of the problem by the prevention of operation of the carriage motor and/or receipt of an alarm in the form of a warning message and/or a sound and/or light alarm.

According to the present invention, the CPU 100 operates the carriage return motor 30 so that normal scanned data can be supplied to the scanner module when the white reference voltage V_{white} is larger than the reference voltage V_{ref} of the white reference panel 70. Otherwise, the CPU 100 stops the operation of the carriage return motor 30 in order to stop the operation of the scanner module 10.

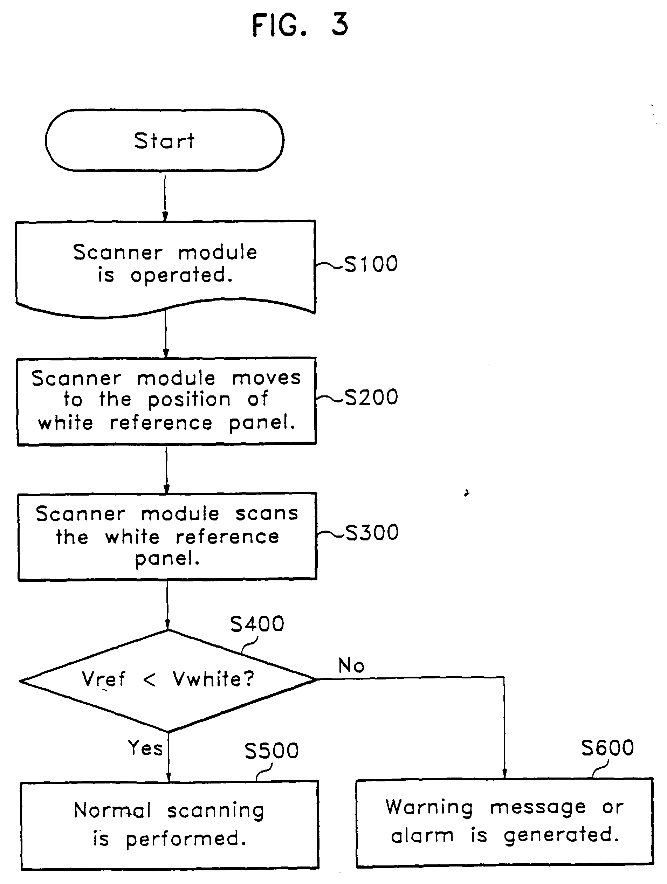

FIG. 3 is a flowchart for illustrating a method for judging contamination of the scanner according to the present invention. To obtain the white reference value of the scanner in operating the scanner (step 100), the scanner module 10 moves to the position where the white reference panel 70 is located (step 200). After that, the scanner module 10 scans the white reference panel 70 (step 300). The data level of the white reference panel 70 which is scanned is converted by the image sensor 80. Then the white reference voltage V_{white} is compared with the reference voltage V_{ref} (step 400). In the case that the white reference value V_{white} is larger than the reference voltage V_{ref}, the scanning operation is performed normally (step 500). Otherwise, the warning message is displayed on the display panel 110 or an alarm is generated (step 600).

The method of judging contamination of the scanner will now be explained in detail. First, the scanner module 10 is operated (step 100) and moved to the position where the white reference panel 70 is located (step 200). At this time, the white reference panel 70 is positioned outside of a document 2, and the movement of the scanner module 10 to the left is limited to the white reference panel 70. The white reference panel is typically adjacent the document. The panel 70 is positioned between the document and a pulley carrying the belt 1, so that scanner module 10 can pass over the panel.

After that, the scanning operation is performed by radiating light from the light source (step 300). After acquiring the data level of the white reference panel 70, the acquired data level is converted into the white reference voltage V_{white}.

The converted white reference voltage V_{white} is inputted to the comparator 90. Moreover, the reference voltage V_{ref} of the white reference panel 70, set by the level resistances R1 and R2, is inputted to the comparator 90.

The white reference voltage V_{white} and the reference voltage V_{ref} of the white reference panel 70 which are inputted are compared in the comparator 90 (step 400).

In the case that the white reference voltage V_{white} is smaller than the reference voltage V_{ref} of the white reference panel 70, since it means that the scanner and/or the white reference panel itself, is contaminated, the CPU 100 stops the operation of the carriage return motor 30. This is achieved by the CPU 100 outputting a low signal to the carriage return motor 30. The CPU 100 informs the user by simultaneously displaying a warning message on the display panel 110 and/or generating a sound and/or light alarm (step 600).

On the other hand, in the case that the white reference voltage V_{white} is larger than the reference voltage V_{ref} of the white reference panel 70, the CPU 100 drives the carriage return motor 30 by outputting a high signal to the carriage return motor 30. Thus, normal scanning operation (step 500) is performed.

As described above, when the data level of the white reference panel which is scanned is above the reference level, normal scanning is performed. Otherwise, the user is notified of contamination of the scanner module and/or the white reference panel. Accordingly, a user can check the scanner and/or the white reference panel and a stable image quality can be obtained by maintaining the scanner clean.

A method and apparatus for judging contamination of a scanner in a device having a scanning function, for example a printer scanner, are disclosed. When a data level of a white reference panel which is scanned is above a predetermined reference level, normal scanning is performed. Otherwise, the contamination of a scanner module or the white reference panel is notified to the user. Accordingly, the user can check the scanner or the white reference panel and stable image quality can be obtained by maintaining the scanner clean.

## Claims

1. A method of judging contamination of a scanner in a device having a scanning function comprising the steps of:
scanning a white reference panel;
comparing a data level derived from scanning the white reference panel with a predetermined reference level; and
performing normal scanning when the data level of said white reference panel is larger than said reference level and/or generating an alarm informing of the contamination of the scanner when the data level of said white reference panel is smaller than said reference level.

2. An apparatus for judging contamination of a scanner comprising:
means for scanning a white reference panel;
means for comparing a data level derived from scanning the white reference panel with a predetermined reference level; and
means for performing normal scanning when the data level of said white reference panel is larger than said reference level and/or generating an alarm informing of the contamination of the scanner when the data level of said white reference panel is smaller than said reference level.

3. A method or an apparatus according to claim 1 or 2, in which a scanner module is moved to a position where the white reference panel is located.

4. A method or an apparatus according to any preceding claims, in which the data level of said white reference panel is converted into a voltage level and then compared with a reference voltage corresponding to said reference level.

5. An apparatus or a method according to any preceding claim comprising:
means for setting a reference voltage level of a white reference panel located so as to be scanned by a scanner module;
an image sensor for converting a data level acquired by scanning said white reference panel into a voltage level;
a comparator for comparing the converted voltage level of said white reference panel with the reference voltage level; and
a central processing unit for operating or stopping a carriage return motor according to the result compared by said comparator.

6. A method or apparatus according to claim 5, in which the means for setting reference voltage of the white reference panel comprise two or more resistances.

7. A method or an apparatus according to claim 5 or 6, in which the carriage return motor is activated in the case that the converted voltage level of said white reference panel is larger than said reference level.

8. A method or an apparatus according to claim 5, 6 or 7, in which the carriage return motor is prevented from operating in the case that the converted voltage level of said white reference panel is smaller than said reference level.

9. A method or an apparatus according to any preceding claim, in which the alarm comprises a warning message displayed on a display panel.

10. A method or an apparatus according to any preceding claim, in which the alarm comprises generation of a sound and/or activation of a light.

11. A method of judging contamination of a scanner in a device having a scanning function as described herein with reference to the accompanying drawings.

12. An apparatus for judging contamination of a scanner in a device having a scanning function as described herein with reference to the accompanying drawings.
